# EUROPÄISCHE PATENTANMELDUNG

(11) **EP 1 186 874 A2**
(43) Veröffentlichungstag der Anmeldung: **13.03.2002**
(21) Anmeldenummer: 01120540.8
(22) Anmeldetag: 29.08.2001
(51) Int. Cl.: G01L 17/00, B60C 23/06, B60C 23/00

(54) **Fahrwerk für Fahrzeuge und Verfahren zur Erkennung von Druckänderungen an Fahrzeugreifen**

(30) Priorität: 06.09.2000 DE 10044128
(71) Anmelder: Continental Aktiengesellschaft, 30165 Hannover (DE)
(72) Erfinder: Korte, Hans-Bernd, 30419 Hannover (DE)

(57) **Zusammenfassung**

Ein Fahrwerk (1) für Fahrzeuge (6) mit einem Fahrzeugreifen (2), einer Felge (3), einer Feder (7) und einem Stoßdämpfer (8) als schwingungsfähiges Feder-Dämpfer-System und einem Aufnehmer (11) zur Messung des Schwingungsverhaltens an dem Fahrwerk (1) hat eine Auswerteeinheit (10) zur Bestimmung charakteristischer Größen des Messsignals des Aufnehmers (11) und zur Auswertung von Abweichungen der charakteristischen Größen zur Erkennung einer Druckänderung an den Fahrzeugreifen (2).

## Beschreibung

Die Erfindung betrifft ein Fahrwerk für Fahrzeuge mit einem Fahrzeugreifen, einer Felge, einer Feder und einem Stoßdämpfer als schwingungsfähiges Feder-Dämpfer-System und mit einem Aufnehmer zur Messung des Schwingungsverhaltens an dem Fahrwerk.

Die Erfindung betrifft ferner ein Verfahren zur Erkennung von Druckänderungen an Fahrzeugreifen.

Fahrzeugluftreifen sind als in sich geschlossene und pneumatisch isolierte Systeme hinreichend bekannt. Funktionsbedingt können sie hohe Rotationsgeschwindigkeiten aufweisen. Für die Funktionsfähigkeit und die Funktionseigenschaften von Fahrzeugreifen ist der Luftdruck bzw. das Luftvolumen innerhalb des Reifensystems wesentlich. Ein Verlust des Luftdrucks durch langsame Diffusion der Luft nach außen oder durch Schädigungen des Materials kann zu Beeinträchtigungen oder Ausfällen der Funktionstüchtigkeit des Fahrzeugreifens führen.

Aufgrund der notwendigen pneumatischen Isolation des Fahrzeugreifens und der Rotationsfähigkeit des Systems ist eine kontinuierliche Überwachung des Reifenluftdrucks über eine direkte Messung nur mit relativ großem Aufwand möglich. Hierzu sind Systeme bekannt, bei denen der Druck im Fahrzeugreifen direkt gemessen und das Messsignal berührungslos von dem rotierenden Fahrzeugreifen an Auswerte- und Anzeigeeinheiten am Fahrzeug übertragen werden.

Diese Systeme verursachen jedoch ein zusätzliches Gewicht im Bereich der sogenannten ungefederten Massen und sind mit zusätzlichen Kosten verbunden.

Weiterhin sind Systeme bekannt, bei denen der Abrollumfang des Fahrzeugreifens als indirektes Maß für den Luftdruck im Fahrzeugreifen ausgewertet wird. Hierbei wird der Abrollumfang mittels geeigneter Software mit den entsprechenden Messwerten der anderen Fahrzeugreifen verglichen. Die Messung kann z.B. über vorhandene Antiblockiersystem (ABS)-Sensoren erfolgen. Nachteilig erfolgt die Auswertung relativ zu einem Vergleichs-Fahrzeugreifen.

Aufgabe der Erfindung war es daher, ein verbessertes Fahrwerk zu schaffen, mit dem Druckänderungen an Fahrzeugreifen erkannt werden können, sowie ein verbessertes Verfahren zur Erkennung von Druckänderungen an Fahrzeugreifen anzugeben.

Die Aufgabe wird durch das Fahrwerk mit den Merkmalen des Anspruchs 1 durch eine Auswerteeinheit zur Bestimmung charakteristischer Größen des Messsignals des Aufnehmers zur Messung des Schwingungsverhaltens an dem Fahrwerk und zur Auswertung von Abweichungen der charakteristischen Größen zur Erkennung einer Druckänderung an dem Fahrzeugreifen gelöst.

Erfindungsgemäß wird somit eine indirekte Messung des Luftdrucks im Fahrzeugreifens vorgenommen, indem das Schwingungsverhalten des Fahrwerks gemessen und zur Erkennung einer Druckänderung in dem Fahrzeugreifen ausgewertet wird.

Hierbei wird ausgenutzt, dass ein Fahrzeugreifen Teil des schwingungsfähigen gefederten und gedämpften Fahrwerks ist, das mindestens aus Fahrzeugreifen, Felge, Feder und Stoßdämpfer besteht. Der Fahrzeugreifen stellt somit zusätzlich zu den im Fahrwerk eingebauten Feder- und Stoßdämpferelementen ein eigenes Feder-Dämpfer-System dar, dass durch eine Eigenfrequenz gekennzeichnet ist. Ein Feder-Dämpfer-System hat die Eigenschaft, die Eigenfrequenz, d.h. die Frequenz, die das Feder-Dämpfer-System nach einmaliger Anregung zu einer Schwingung unabhängig von der Amplitude der Schwingung annehmen würde, besonders gut zu übertragen.

Bei der Messung des Schwingungsverhaltens an dem Fahrwerk wird somit auch die Schwingung des Feder-Dämpfer-Systems des Fahrzeugreifens, insbesondere die Eigenfrequenz des Fahrzeugreifens erfasst. Bei einer Druckänderung des Fahrzeugreifens ergibt sich eine Verschiebung der Eigenfrequenz des Feder-Dämpfer-Systems, das im wesentlichen von der Federsteifigkeit des Systems beeinflusst ist. Die Federsteifigkeit eines Fahrzeugreifens ist abhängig von Größen wie Temperatur, Fahrzeuggeschwindigkeit, Reifenkonstruktion, aber auch vom Luftdruck. Die erstgenannten Einflussgrößen können leicht separat gemessen und als Einflussgrößen isoliert werden, so dass die Änderung der Eigenfrequenz als Maß für die Druckänderung in bekannter Weise einfach ausgewertet werden kann.

Als Aufnehmer zur Messung des Schwingungsverhaltens an dem Fahrwerk kann z.B. ein Wegaufnehmer an den Stoßdämpfer des Fahrwerks angeordnet werden. Es kann aber auch ein Drehwinkelaufnehmer verwendet werden, um die relative Verschwenkung des Fahrwerks um die Fahrwerkaufhängung zu messen. Alternativ hierzu kann auch ein Piezoelement zur Schwingungsmessung oder ein Massenträgheitssensor oder vergleichbare bekannte Schwingungssensoren verwendet werden.

Besonders vorteilhaft ist es, den Sensor eines aktiven Federbeindämpferlagers des Fahrwerks gleichzeitig als Aufnehmer für das Messsignal des Schwingungsverhaltens zu verwenden. Aktive Federbeindämpferlager beinhalten herkömmlicherweise Sensoren zur Messung der Schwingungen im Federbein, um diesen Schwingungen aktiv Gegenschwingungen zu überlagern. Durch gezielte Auswertung des Frequenzbereiches im Bereich der Eigenfrequenz des Fahrzeugreifens können Druckänderungen aus den Schwingungen im Federbein erkannt werden.

Die Aufnehmer und die Auswerteinheit sind vorzugsweise ausgebildet, um eine Druckänderung durch Messung und Auswertung der Eigenfrequenz des Fahrwerks zu erkennen. Die Messung und Auswertung kann auch im Frequenzbereich der Schwingung des Fahrzeugreifens eingeschränkt erfolgen.

Vorzugsweise ist die Auswerteeinheit zur Transformation des Messsignals des Aufnehmers in den Frequenzbereich und zum Vergleich der Phasenverläufe des transformierten Messsignals mit Soll-Phasenverläufen oder zum Vergleich der Amplituden des transformierten Messsignals in ausgewählten Frequenzbereichen mit Soll-Amplituden zur Erkennung einer Druckänderung ausgebildet.

Bei dem erfindungsgemäßen Verfahren wird zur Erkennung von Druckänderungen an Fahrzeugreifen entsprechend das Schwingungsverhalten an dem Fahrwerk kontinuierlich gemessen, charakteristische Größen des Messergebnisses bestimmt und Abweichungen der charakteristischen Größen zur Erkennung einer Druckänderung ausgewertet.

Die Erfindung wird nachfolgend anhand der beigefügten Zeichnungen näher erläutert. Es zeigen:
- Fig. 1 -: schematische Darstellung eines Fahrwerks mit einem Aufnehmer zur Messung des Schwingungsverhaltens an dem Fahrwert;
- Fig. 2 -: Skizze des Feder-Dämpfer-Systems des Fahrwerks aus Fig. 1;
- Fig. 3 -: Frequenz-Amplituden-Diagramm eines in den Frequenzbereich transformierten Messsignals des Schwingungsverhaltens eines Fahrwerks.

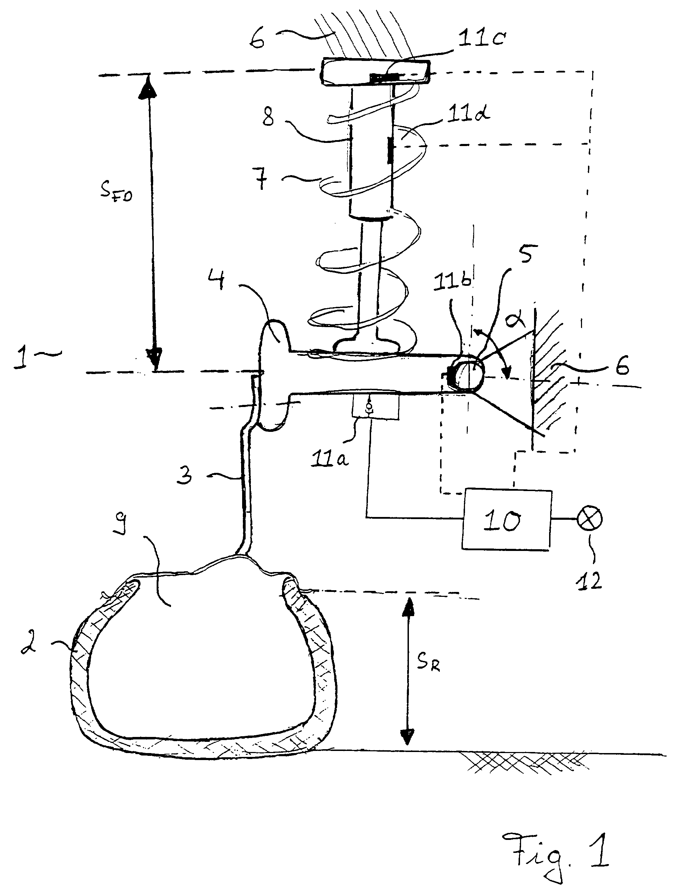

Die Fig. 1 lässt ein Fahrwerk 1 mit einem Fahrzeugreifen 2 und einer Felge 3 erkennen. Die Felge 3 ist rotierbar um eine Achse 4 an diese in bekannter Weise angeschraubt. Die Achse 4 ist an einer Fahrzeugaufhängung 5 verschwenkbar an das Fahrzeug 6 angelenkt. Das Fahrwerk 1 hat weiterhin in bekannter Weise ein Feder-Dämpfer-System bestehend aus einer Feder 7 und einem Stoßdämpfer 8, das zwischen Achse 4 und Fahrzeug 6 angeordnet ist.

Der Fahrzeugreifen 2 ist ein in sich geschlossenes pneumatisch isoliertes System mit einem Luftdruck bzw. Luftvolumen im Innenraum 9 des Fahrzeugreifens 2, der wesentlich für die Funktionsfähigkeit und die Funktionseigenschaften des Fahrzeugreifens 2 ist.

Zur Erkennung von Druckänderungen in dem Fahrzeugreifen 2 ist eine Auswerteeinheit 10 vorgesehen, um charakteristische Größen eines Messsignals für das Schwingungsverhalten des Fahrwerks 1 zu bestimmen und Abweichungen der charakteristischen Größen zur Erkennung einer Druckänderung an dem Fahrzeugreifen 2 auszuwerten.

Die Messung des Schwingungsverhaltens an dem Fahrwerk 1 kann mit verschiedenen Aufnehmern 11 erfolgen, die entweder alternativ oder kombiniert miteinander verwendet werden können. So kann z.B. ein Massenträgheitssensor 11a vorzugweise an der Achse 4 des Fahrwerks 1 verwendet und an die Auswerteeinheit 10 angeschlossen werden. Das Schwingungsverhalten kann aber auch mit einem Drehwinkelaufnehmer 11b durch Messung der relativen Verschwenkung des Fahrwerks 1 um die Fahrwerkaufhängung 5 gemessen werden. Es kann auch ein Piezoelement 11c vorzugweise im Bereich des Federbeins 12, d.h. des Anlenkpunktes der Feder 7 und des Stoßdämpfers 8 an das Fahrzeug 6 als Aufnehmer 11 verwendet werden.

Besonders vorteilhaft ist die gemeinsame Nutzung eines Sensors 11d eines aktiven Federbeindämpferlagers als Aufnehmer 11. Ein aktives Federbeindämpferlager ist herkömmlicherweise zur Messung der Schwingungen des Fahrwerks 1 und zum aktiven Aufbringen von Gegenschwingungen in Abhängigkeit von den gemessenen Schwingungen ausgebildet. Erfindungsgemäß wird das ohnehin vorhandene Messsignal nunmehr gleichzeitig zur Erkennung eines Druckverlustes an dem Fahrzeugreifen 2 genutzt.

Die Auswerteeinheit 10 kann mit einer Anzeigeeinheit 12 verbunden sein, um dem Fahrer des Fahrzeugs 6 ein Warnsignal zu geben, wenn die Druckänderung des Fahrzeugreifens 2 eine definierte Toleranzschwelle über- bzw. unterschreitet.

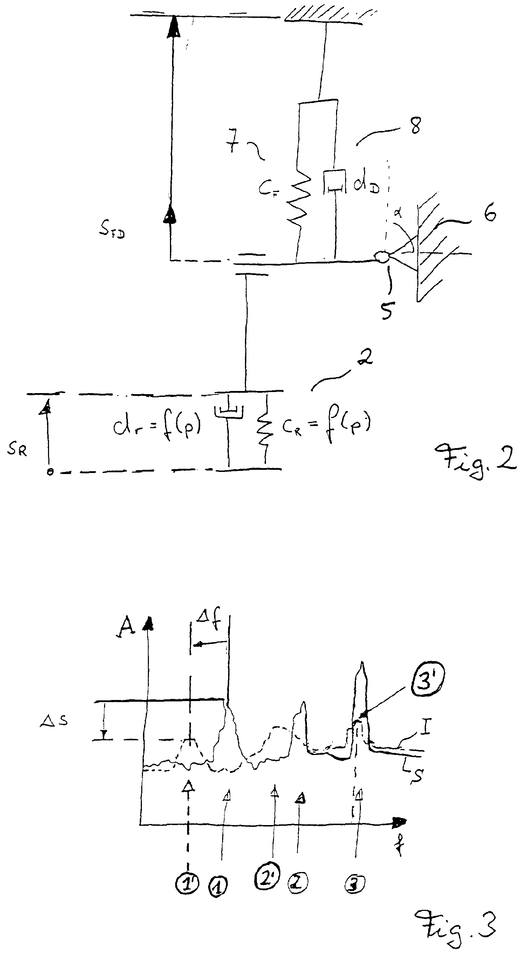

Die Fig. 2 lässt eine Skizze des Feder-Dämpfer-Systems des in der Fig. 1 dargestellten Fahrwerks 1 erkennen. Der Fahrzeugreifen 2 stellt ein in sich geschlossenes Feder-Dämpfer-System dar, das über die Felge 3 mit dem Feder-Dämpfer-System des Federbeins bestehend aus Feder 7 und Stoßdämpfer 8 gekoppelt ist.

Das Feder-Dämpfer-System des Fahrzeugreifens 2 ist durch das Dämpfungsmaß dr als Funktion des Dämpfungsmaßes dr und der Federsteifigkeit cr definiert. Das Dämpfungsmaß und die Federsteifigkeit sind beide Funktionen, die u.a. abhängig von dem Luftdruck sind. Zusätzlich ist die Federsteifigkeit des Fahrzeugreifens 2 abhängig von Größen wie Temperatur, Fahrzeuggeschwindigkeit bzw. Drehzahl des Fahrzeugreifens 2 und der Konstruktion des Fahrzeugreifens 2. Durch gesonderte Messung der variablen Einflussgrößen Temperatur und Fahrzeuggeschwindigkeit sowie durch Definition eines Parameters für die Reifenkonstruktion kann der Einfluss dieser Größen auf die Änderung des Schwingungsverhaltens des Fahrwerks 1 leicht in bekannter Weise isoliert und eine lediglich vom Luftdruck des Fahrzeugreifens 2 abhängige Funktion des Schwingungsverhaltens ermittelt und ausgewertet werden.

Zur Auswertung des Messsignals des Schwingungsverhaltens des Fahrwerks 1 ist es vorteilhaft, Änderungen der Eigenfrequenz des Schwingungsanteils des Fahrzeugreifens 2 zu ermitteln und auszuwerten.

Wie aus der Fig. 2 erkennbar ist, hat das Feder-Dämpfer-System des Fahrzeugreifens 2 eine Eigenfrequenz SR, die sich von der Eigenfrequenz SFD des Feder-Dämpfer-Systems des Federbeins bestehend aus Feder 7 und Stoßdämpfer 8 unterscheidet.

Ein Verfahren zur Erkennung von Druckänderungen an Fahrzeugreifen 2 ist anhand des Diagramms eines beispielhaften Messergebnisses des Schwingungsverhaltens beschrieben, dass in der Fig. 3 skizziert ist. Das Diagramm zeigt zwei in den Freqenzbereich transformierte Messsignale für das Schwingungsverhalten an einem Fahrwerk 1 jeweils als Frequenz-Amplituden-Spektrum. Die Eigenfrequenzen des schwingungsfähigen Gesamtsystems des Fahrwerks 1 können anhand der Maximalwerte der Frequenz-Amplituden-Spektren ermittelt werden.

Ein Soll-Phasenverlauf mit den entsprechenden Eigenfrequenzen zeigt die Kurve S. Der Soll-Phasenverlauf der Kurve S wird durch die Fahrzeuggeschwindigkeit, die Temperatur, durch weitere Fahrwerksparameter, wie beispielsweise eine variable Feder-Dämpfer-Einstellung z.B. bei einer Luftfeder, und durch den Luftdruck des Fahrzeugreifens 2 bestimmt. Die Soll-Phasenverläufe können in der Werkstatt kalibriert und eingestellt werden. Alternativ können die Soll-Parameter durch den Reifenhersteller für das Fahrwerksystem vorgegeben sein. Die Einflüsse der Fahrzeuggeschwindigkeit, Temperatur und der weiteren Fahrzeugparameter auf die Soll-Phasenverläufe sind bekannt. Durch Messen dieser Parameter und Kompensation der Soll-Phasenverläufe anhand der gemessenen Werte können diese Einflüsse kompensiert werden.

Bei einem Druckverlust in dem Fahrzeugreifen 2 verringert sich die Federsteifigkeit des dynamischen Fahrzeugreifensystems, so dass auch die Eigenfrequenz dieses Systems abnimmt. Die Eigenfrequenz des Fahrzeugreifensystems ist im idealen Zustand mit (1) gekennzeichnet. Sie verschiebt sich um die Frequenz Δf in den Punkt (1'). Gleichzeitig nimmt bei einem Druckverlust im Fahrzeugreifen 2 das Dämpfungsmaß dr des Fahrzeugreifenssystems zu. Dies hat eine Verringerung der Amplitude A um den Wert Δs zur Folge.

Durch Auswertung der Amplitude A im Frequenzbereich (1, 1') der Schwingungen des Fahrzeugreifens können somit Druckänderungen an Fahrzeugreifen zuverlässig erkannt werden, ohne dass Einflüsse auf das Fahrwerksystem das Messergebnis störend beeinflusst.

Denkbar sind aber auch komplexe Messungen des Phasenverlaufs.

Das Erkennen von Druckänderungen an dem Fahrzeugreifen 2 kann aber auch mit Hilfe eines direkten Vergleichs der Eigenfrequenzen des Gesamtsystems mit Sollwerten erfolgen, wobei die Sollwerte an die zusätzlichen Einflussgrößen wie Temperatur, Fahrzeuggeschwindigkeit etc. angepasst werden müssen.

## Patentansprüche

1. Fahrwerk (1) für Fahrzeuge (6) mit einem Fahrzeugreifen (2), einer Felge (3), einer Feder (7) und einem Stoßdämpfer (8) als schwingungsfähiges Feder-Dämpfer-System und mit einem Aufnehmer (11) zur Messung des Schwingungsverhaltens an dem Fahrwerk (1), **gekennzeichnet durch** eine Auswerteeinheit (10) zur Bestimmung charakteristischer Größen des Messsignals des Aufnehmers (11) und zur Auswertung von Abweichungen der charakteristischen Größen zur Erkennung einer Druckänderung an dem Fahrzeugreifen (2), wobei die Aufnehmer (11) und die Auswerteeinheit (10) ausgebildet sind, um eine Druckänderung **durch** Messung und Auswertung des Schwingungsverhaltens im Frequenzbereich der Schwingung des Fahrzeugreifens (2) zu erkennen.

2. Fahrwerk (1) nach Anspruch 1, **dadurch gekennzeichnet, dass** die Aufnehmer (11) und die Auswerteeinheit (10) ausgebildet sind, um eine Druckänderung durch Messung und Auswertung des Schwingungsverhaltens im Frequenzbereich der Schwingung des Fahrzeugreifens (2) zu erkennen.

3. Fahrwerk (1) nach Anspruch 1, **dadurch gekennzeichnet, dass** der Aufnehmer (11) ein an dem Stoßdämpfer (8) angeordneter Wegaufnehmer ist.

4. Fahrwerk (1) nach Anspruch 1, **dadurch gekennzeichnet, dass** der Aufnehmer (11) ein Massenträgheitssensor (11a) ist.

5. Fahrwerk (1) nach Anspruch 1, **dadurch gekennzeichnet, dass** der Aufnehmer (11) ein Drehwinkelaufnehmer (11b) zur Messung der relativen Verschwenkung des Fahrwerks (1) um die Fahrwerkaufhängung (5) ist.

6. Fahrwerk (1) nach Anspruch 1, **dadurch gekennzeichnet, dass** der Aufnehmer (11) ein Piezoelement (11c) ist.

7. Fahrwerk (1) nach einem der Ansprüche 1 bis 6, **dadurch gekennzeichnet, dass** die Aufnehmer (11) und die Auswerteeinheit (10) ausgebildet sind, um eine Druckänderung durch Messung und Auswertung des Schwingungsverhaltens im Frequenzbereich der Schwingung des Fahrzeugreifens (2) zu erkennen.

8. Fahrwerk (1) nach einem der vorgehenden Ansprüche, **dadurch gekennzeichnet, dass** die Auswerteeinheit (10) zur Transformation des Messsignals des Schwingungsverhaltens in den Frequenzbereich und zum Vergleich der Phasenverläufe des transformierten Messsignals mit Soll-Phasenverläufen oder zum Vergleich der Amplituden des transformierten Messsignals in ausgewählten Frequenzbereichen mit Soll-Amplituden zur Erkennung einer Druckänderung an dem Fahrzeugreifen (2) ausgebildet ist.

9. Verfahren zur Erkennung von Druckänderungen an Fahrzeugreifen (2), **gekennzeichnet durch**
- kontinuierliches Messen des Schwingungsverhaitens an dem Fahrwerk (1);
- Bestimmung der Eigenfrequenz des Fahrwerks (1) als charakteristischer Größen des Messergebnisses; und
- Auswerten von Abweichungen der Eigenfrequenz des Fahrwerks (1) zur Erkennung einer Druckänderung.

10. Verfahren nach Anspruch 9, **gekennzeichnet durch** Messung und Auswertung des Schwingungsverhaltens in dem Frequenzbereich der Schwingungen des Fahrzeugreifens (2).

11. Verfahren nach einem der Ansprüche 9 bis 10, **gekennzeichnet durch**
- Transformation des Messsignals des Schwingungsverhaltens in den Frequenzbereich;
- Vergleich der Phasenverläufe des transformierten Messsignals mit Soll-Phasenverläufen oder Vergleich der Amplituden des transformierten Messsignals in ausgewählten Frequenzbereichen mit Soll-Amplituden zur Erkennung einer Druckänderung.
